# EUROPEAN PATENT SPECIFICATION

(11) **EP 3 892 423 B1**
(45) Date of publication and mention of the grant of the patent: **24.01.2024**
(21) Application number: 19892543.0
(22) Date of filing: 07.08.2019
(51) Int. Cl.: G05D 1/02, B25J 5/00, B25J 9/16, B65G 1/10, G05B 19/418, G06Q 10/08

(54) **TRANSFER ROBOT-BASED CONTROL METHOD AND DEVICE**
AUF TRANSFERROBOTER BASIERENDES STEUERUNGSVERFAHREN UND -VORRICHTUNG
PROCÉDÉ ET DISPOSITIF DE COMMANDE BASÉS SUR UN ROBOT DE TRANSFERT

(30) Priority: 04.12.2018 CN 201811475740
(43) Date of publication of application: 13.10.2021
(73) Proprietor: Beijing Jingdong Qianshi Technology Co., Ltd., Beijing 100176 (CN)
(72) Inventor: ZHANG, Lei, Beijing 100086 (CN)
(74) Representative: Bandpay & Greuter
(86) International application number: PCT/CN2019/099576
(87) International publication number: WO 2020/113987

(56) References cited:
- CN-A- 106 429 161
- CN-A- 106 829 455
- CN-U- 206 537 813
- CN-U- 207 943 502
- JP-A- H1 044 072
- JP-A- 2010 102 590
- US-A1- 2015 117 995

## Description

### TECHNICAL FIELD

Embodiments of the present disclosure relate to the field of computer technology, and more particularly, to a method and apparatus for controlling based on a carrying robot.

### BACKGROUND

With the development of electronic technology, electronic commerce technology has been widely used. In order to increase the sorting and delivery speed of the goods, it is common for the carrying robot to be arranged in the storage warehouse to carry the shelves from which the selected items need to be picked to a sorting area designated in the storage warehouse for sorting the items. The carrying robot may be of various types, for example, an unmanned carrying vehicle, also referred to as an automatic guide transporting vehicle. The vehicle is generally provided with an electromagnetic or optical automatic guide device, or the like, capable of traveling along a prescribed guide path, and is a transporting vehicle having safety protection and various transfer functions.

In the related warehouse storage technology, the direction of the shelf remains unchanged when the shelf is transported in the storage warehouse. When the sorting table needs to pick items on another side of the shelf, the shelf needs to be rotated.

US patent application US2015117995A1 discloses a system and method for maneuvering a mobile drive unit. In US2015117995A1, a mobile drive unit is provided for transporting an inventory holder. The mobile drive unit is operable to dock with the inventory holder, move the inventory holder in a first translational direction, and while docked with the inventory holder, selectively rotate the inventory holder while continuing to move in the first translational direction. Some or all rotations of the inventory holder are performed in rotation areas. Rotations may be useful, for example, in presenting a particular face of an inventory holder to an operator of an inventory station.

### SUMMARY

The embodiment of the disclosure provides a method and apparatus for controlling based on a carrying robot.

According to a first aspect, an embodiment of the present disclosure provides a method for controlling based on a carrying robot, where the carrying robot carries a shelf connected to the carrying robot through a rotatable stepper motor, and the method includes: detecting whether the carrying robot is currently located in a sorting area or a non-sorting area, the sorting area being designated in a storage warehouse for sorting items on shelves in the storage warehouse, and the non-sorting area including a shelf area for storing the shelves, and an area connecting the shelf area and the sorting area and being used for travelling by the carrying robot; in response to detecting that the carrying robot is currently located in the non-sorting area, controlling the carrying robot to travel along a preset path to a first preset position in the non-sorting area, using the first preset position as a first rotation position, and performing, at the first rotation position, a control step comprising: determining whether a rotation condition for
the stepper motor to perform a rotation operation is satisfied at the first rotation position, and in response to determining that the rotation condition for the stepper motor to perform the rotation operation is satisfied at the first rotation position, controlling the stepper motor to rotate so that a side, having a target identifier, of the shelf faces a designated direction, where the rotation conditions include: no obstacle at a predetermined distance from the carrying robot; and/or no other carrying robot passing a current position where the carrying robot is located, and where the method further includes: in response to detecting that the carrying robot is currently located in the sorting area, and that the side of the shelf having the target identifier is not toward the designated direction, controlling the carrying robot to travel to a second rotation position where the stepper motor performs the rotation operation in the sorting area.

In some embodiments, the method further includes, in response to determining that the rotation condition for the stepper motor to perform the rotation operation is not satisfied at the first rotation position, controlling the carrying robot to travel along the preset path to a next preset position, using the next preset position as the first rotation position, and continuing to execute the control step at the next preset position.

In some embodiments, the controlling the carrying robot to travel to the position where the stepper motor performs the rotation operation in the sorting area includes selecting, from at least one entrance position, an entrance position closest to a current position of the carrying robot, wherein the entrance position is an entrance into the second rotation position; generating, based on the selected entrance position, a travel path for the carrying robot to reach the second rotation position from the current position through the selected entrance position; and controlling the carrying robot to travel to the second rotation position along the generated travel path.

In some embodiments, position information of a next position of the carrying robot is determined in response to receiving an instruction that the side of the shelf having the target identifier faces the designated direction; and the carrying robot is controlled to travel to the next position.

In some embodiments, the determining position information of the next position of the carrying robot includes determining a number of carrying robot that will perform a sorting task before the carrying robot; and determining information of a next position based on the determined number.

In some embodiments, the controlling the carrying robot to travel to the next position includes: detecting whether a deviation between a traveling direction of the carrying robot and the next position exceeds a preset threshold value; and in response to determining that the deviation between the traveling direction of the carrying robot and the next position exceeds the preset threshold value, adjusting the traveling direction of the carrying robot so that the carrying robot travels to the next position.

According to a second aspect, an embodiment of the present disclosure provides an apparatus for controlling based on a carrying robot, including: units for performing the method according to the first aspect.

In a third aspect, an embodiment of the present disclosure provides an electronic device including one or more processors; and a storage device storing one or more programs, where the one or more programs when executed by one or more processors cause the one or more processors to implement a method according to any embodiment of the control method.

In a fourth aspect, an embodiment of the present disclosure provides a computer readable storage medium storing a computer program which, when executed by a processor, implements the method according to any embodiment of the control method.

According to the method and apparatus for controlling based on the carrying robot provided in the embodiments of the present disclosure, by detecting whether the carrying robot is currently located in a sorting area, in response to detecting that the carrying robot is not currently located in the sorting area, whether a rotatable stepping motor connected to the carrying robot and a shelf satisfies a rotation condition for performing a rotation operation at a preset first rotation position may be determined, and in response to determining that the rotation condition is satisfied at the first rotation position, the stepping motor may be controlled to rotate so that a side of the shelf having a target mark faces a designated direction, thereby enabling the carrying robot to directly perform a side-changing operation on the shelf when the rotation condition is satisfied, thereby reducing the number of carrying robots designated by the sorting area for performing a side-changing operation on the shelf at the position for performing the side-changing operation on the shelf, thereby improving the efficiency of the side-changing operation on the shelf, which is helpful to improving the sorting speed of goods.

### BRIEF DESCRIPTION OF THE DRAWINGS

Other features, objects, and advantages of the present disclosure will become more apparent by reading the detailed description of non-limiting embodiments made with reference to the following drawings:
FIG. 1 is an example system architecture diagram in which an embodiment of the present disclosure may be applied;
FIG. 2 is a flowchart of an embodiment of a method for controlling based on a carrying robot according to the present disclosure;
FIG. 3A is a schematic diagram of a grid map applied to a storage warehouse of the present disclosure;
FIG. 3B is a schematic diagram of an application scenario of a method for controlling based on a carrying robot according to the present disclosure;
FIG. 4 is a flowchart of yet another embodiment of a method for controlling based on a carrying robot according to the present disclosure;
FIG. 5 is a schematic diagram of yet another application scenario of a method for controlling based on a carrying robot according to the present disclosure;
FIG. 6 is a schematic structural diagram of an embodiment of an apparatus for controlling based on a carrying robot according to the present disclosure; and
FIG. 7 is a schematic structural diagram of a computer system adapted for implementing a server of an embodiment of the present disclosure.

### DETAILED DESCRIPTION

The present disclosure is described in further detail below with reference to the accompanying drawings and examples. It is to be understood that the specific embodiments described herein are merely illustrative of the related disclosure and are not restrictive of the disclosure. It is also to be noted that, for ease of description, only parts related to the disclosure are shown in the drawings.

It should be noted that the embodiments in the present disclosure and the features in the embodiments may be combined with each other without conflict. The present disclosure will now be described in detail with reference to the accompanying drawings and examples.

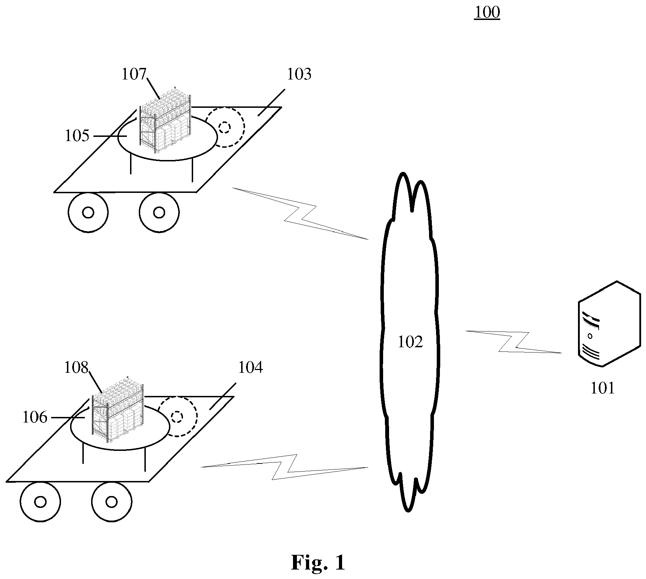

FIG. 1 illustrates an example system architecture 100 in which an embodiment of a method for controlling based on a carrying robot or an apparatus for controlling based on a carrying robot of the present disclosure may be applied.

As shown in FIG. 1, the system architecture 100 may include a control device 101 of a storage warehouse, a network 102, carrying robots 103, 104, stepper motors 105, 106, and shelves 107, 108. The network 102 serves as a medium for providing a communication link between the control device 101, the carrying robots 103, 104 and the stepper motors 105, 106. Network 102 may include various types of connections, such as wired, wireless communication links, or fiber optic cables, among others.

The carrying robots 103, 104 are connected to the shelves 107, 108 by stepper motors 105, 106. The stepper motors 105, 106 are rotatable under the control of the control device 101 so that the side, including the target identifier, of the shelves 107, 108 connected to the stepper motors is rotatable to a designated direction.

The storage warehouse may include a sorting area and a non-sorting area.

The non-sorting area may include a shelf area for storing shelves, and an area connecting the shelf area and the sorting area and being used for travelling by the carrying robot. The shelf area is provided with shelves, each of which is provided with a plurality of items. Each shelf generally includes a plurality of sides (e.g., four sides), each of which stores an item. In the area connecting the shelf area and the sorting area and being used for the carrying robot to travel, a plurality of designated positions, at which the shelf can be rotated to change sides, is arranged. When the working table of the sorting area needs to pick items on other side of the shelf, the carrying robot may change side of the shelf when traveling to the designated position.

The sorting area is an area for sorting items, and generally includes a plurality of sorting stations. Each carrying robot may transport the carried shelf to a sorting table corresponding to the shelf according to the sorting table identifier, for sorting the items on the shelf by the sorting table; and the sorting station can also place newly arrived goods unpacked from the box on the shelf.

The sorting area is generally provided with a designated area for rotating the side, including the target identifier, of the shelf to a designated direction. If rotating the side of the shelf with the target identifier to the designated direction is not finished in the non-sorting area, the side of the shelf with the target identifier can be rotated to the designated direction in the designated area.

The control device 101 may be a terminal device or a server, for controlling the operation of the storage warehouse.

The control device 101 may be a server that provides various services, such as a background server that provides instructions for the execution actions of the carrying robots 103, 104 and the execution actions of the stepping motors 105, 106. The background server can send control commands to the carrying robot and the stepping motor according to the orientation information of the shelf and the position information of the carrying robot.

It should be noted that the server may be hardware or software. When the server is hardware, a distributed server cluster composed of multiple servers may be implemented, or a single server may be implemented. When the server is software, it may be implemented as a plurality of software pieces or software modules (e.g., for providing distributed services), or it may be implemented as a single software piece or software module, which is not specifically limited herein.

It should be noted that the control device may also be a terminal device, and the terminal device may be arranged separately, or may be arranged on the carrying robot in the storage warehouse.

The carrying robots 103, 104 may interact with the control device 101 via the network 102 to receive or transmit information or the like. The carrying robot 103, 104 may be a mechanical electronic device having a computing capability and an execution capability, or may be a combination of a terminal device having a control capability and a mechanical mechanism. For example, the execution device may include, but is not limited to, an automated guided vehicle (AGV) or the like.

It should be noted that the method for controlling based on a carrying robot provided in the embodiment of the present disclosure is generally executed by the control device 101, and accordingly, the apparatus for controlling based on a carrying robot is generally provided in the control device 101.

It will be appreciated that the number of control devices, networks and carrying robots in FIG. 1 is merely illustrative. There may be any number of control devices, networks, and execution devices as required by the implementation.

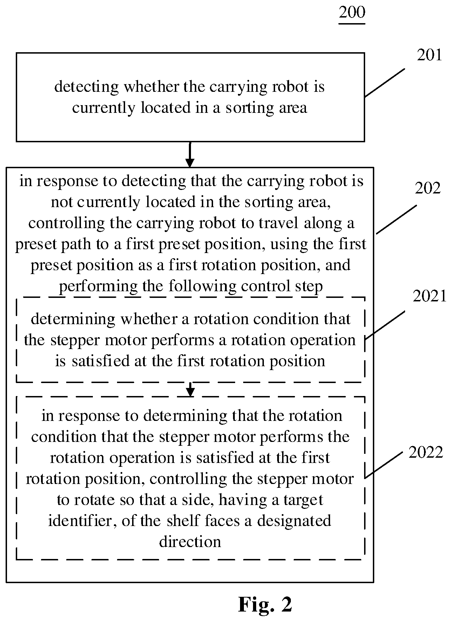

With continuing reference to FIG. 2, a flow diagram 200 of an embodiment of a method for controlling based on a carrying robot according to the present disclosure is shown. The present embodiment is mainly illustrated by applying the method to an electronic device having a certain operation capability, which may be the control device 101 shown in FIG. 1. The carrying robot carries a shelf, which is connected to the carrying robot through a rotatable stepper motor. The flow 200 of the control method based on the carrying robot includes the steps of 201 and 202.

Step 201 includes detecting whether the carrying robot is currently located in the sorting area.

In this embodiment, the execution body of the method for controlling based on the carrying robot (for example, the control device 101 shown in FIG. 1) may detect whether the carrying robot is currently located in the sorting area.

In the present embodiment, after the carrying robot takes out the shelves from the shelf area, the carrying robot may move with the carried shelves in the storage warehouse to transport the shelves to the sorting area. Generally, a sorting area and a non-sorting area are arranged in the storage warehouse, and the two areas are separated by demarcation marks. The demarcation mark may be, for example, a geographical coordinate line consisting of a sequence of successive geographical coordinate points, which divides the storage warehouse into a sorting area and a non-sorting area, etc. The shelf area for storing the shelf is located in the non-sorting area.

In the present embodiment, a GPS (Global Positioning System) may be arranged in advance in the carrying robot. The location of the carrying robot in the storage warehouse can be located by the real-time positioning system, so that whether the carrying robot is located in the sorting area can be detected.

In the present embodiment, a travel path of the carrying robot may be planned in advance, and then a docking point of the carrying robot may be set on the path. When reaching the docking point, the carrying robot may scan the two-dimensional code at the position to detect whether the carrying robot is currently located in the sorting area by periodically scanning the two-dimensional code.

Step 202 includes: in response to detecting that the carrying robot is currently located in the non-sorting area, controlling the carrying robot to travel along a preset path to a first preset position, and using the first preset position as the first rotation position.

In the present embodiment, the first rotation position is a position in which a side, including the target identifier, of the shelf carried by the carrying robot in the non-sorting area is rotated to a designated direction, and the first preset position may be a first rotation position closest to the current position of the carrying robot, or a first rotation position to which the carrying robot is most easily accessible at present. The "easily accessible" is that when the robot travels to this position, there is no obstacles around, and detour is not needed. The obstacle may be, for example, another carrying robot, a cargo box, or the like.

In the present embodiment, the execution body may plan the path of the carrying robot from the current position to the first preset position as a preset path according to the current position of the carrying robot and the map of the storage warehouse, and then transmit the preset path to the carrying robot. After receiving the instruction, the carrying robot may travel along the predetermined path to the first predetermined position.

In the present embodiment, the first rotation position may be arranged at an intersection of two lanes where no shelves are arranged, in the non-sorting area.

In the present embodiment, the first preset position may be used as the first rotation position, thereby performing the following control steps.

Step 2021 includes determining whether a rotation condition that the stepper motor performs the rotation operation is satisfied at the first rotation position.

The rotation condition may be used to indicate a condition that the stepper motor cannot perform rotation due to an obstacle at the first rotation position, or may be used to indicate a condition that no obstacle at the first rotation position such that the stepper motor can perform rotation.

In some alternative implementations of the present embodiment, the rotation condition may include no obstacle within a predetermined distance from the carrying robot. The shelf is generally a polyhedron, such as a tetrahedron, a hexahedron, or the like, for easy storage and access to items. Therefore, when the stepper motor performs the rotation operation, in order to prevent the shelf from being scratched or the goods from falling out of the shelf due to collision with other objects, it is necessary to ensure that there is no obstacle within a predetermined distance from the carrying robot. The obstacle may be, for example, a shelf, a case, a carrying robot, or the like. The predetermined distance may be, for example, a circle drawn with the center of the carrying robot as the center and the longest diagonal of the shelf as the diameter, and the distance between the geographical coordinate point on the circle and the geographical coordinate point on the center of the carrying robot as the minimum preset distance. There is no obstacle within the preset distance. In this way, it is possible to ensure that the shelves can be safely rotated without taking up too much space, so that the work efficiency of the carrying robots in the storage warehouse can be improved.

In some alternative implementations of the present embodiment, the rotation conditions may include that no other carrying robot passes the current position where the carrying robot is located. Since a position at which the carrying robot stops at the first rotation position to rotate the shelf is arranged at an intersection of two lanes, the intersection is often passed by the carrying robot. If there is another carrying robot passing through the first rotation position at this time, the another carrying robot needs to wait for the carrying robots to perform the rotation operation before continuing to travel; or the another carrying robot causes a collision with the currently parked carrying robot by traveling at a previous speed without knowing that there is the parked carrying robot at the first rotation position. By setting the determination condition, it is possible to ensure that the normal travel of another carrying robots is not affected, so as to prevent blockage of the carrying robots in the storage warehouse. Therefore, the working efficiency of the carrying robots in the storage warehouse can be improved.

Step 2022 includes controlling rotation of the stepper motor so that a side of the shelf having the target identifier faces the designated direction, in response to determining that the rotation condition that the stepper motor performs the rotation operation is satisfied at the first rotation position.

In the present embodiment, each side of the shelf is generally provided with an identifier, which may be, for example, A side, B side, C side, D side, etc., and each shelf is also generally provided with an identifier, which is used to uniquely indicate each shelf in the storage warehouse. For example, the row number and the column number of the lane may be used as an identifier for each shelf. When the carrying robot needs to select and transport a shelf from the shelf area to the sorting table, the selection may be performed based on the shelf identifiers.

In the present embodiment, the same sides of the shelves are generally oriented in the same direction (for example, the A sides are directed toward a direction in which the robot is moving) during transport. When the sorting table needs to pick an item from the D side of the shelf, the stepping motor needs to be controlled to drive the shelf to rotate so that the D side of the shelf faces the sorting table.

In the present embodiment, the execution body may control rotation of the stepper motor so that a side of the shelf having the target identifier faces the designated direction, in response to determining that the rotation condition that the stepper motor performs the rotation operation is satisfied at the first rotation position.

For example, when the carrying robot moves to the position of the sorting table, along the moving direction of the carrying robot, the right side of the carrying robot faces the sorting table, and the stepper motor can be controlled to rotate so that the right side of the shelf along the moving direction of the carrying robot is the D side.

In some alternative implementations of the present embodiment, in response to determining that the rotation condition that the stepper motor performs the rotation operation is not satisfied at the first rotation position, the carrying robot is controlled to travel along the preset path to the next preset position, and the next preset position is taken as the first rotation position, and the above control steps 2021-2022 is proceeded.

It should be noted that a plurality of first rotation positions may be arranged in the path that the carrying robot travels to the sorting area after robot picks the shelf from the shelf area. When the rotation condition is not satisfied at the first rotation position, whether the rotation condition is satisfied at the next rotation position on the path may be determined, so that the side of the shelf with the target identifier may be rotated to the designated direction when the rotation condition is satisfied. Therefore, with this alternative implementation, the position at which the stepper motor can perform the rotation operation may be increased in the non-sorting area, so as to prevent that the time for waiting the side changing operation by the carrying robot is too long, which caused by the case that all the carrying machines that need to perform the shelf rotation travel to the sorting area to perform the sorting and side rotating operation, and the work efficiency of performing the side rotating operation on the shelf can be improved.

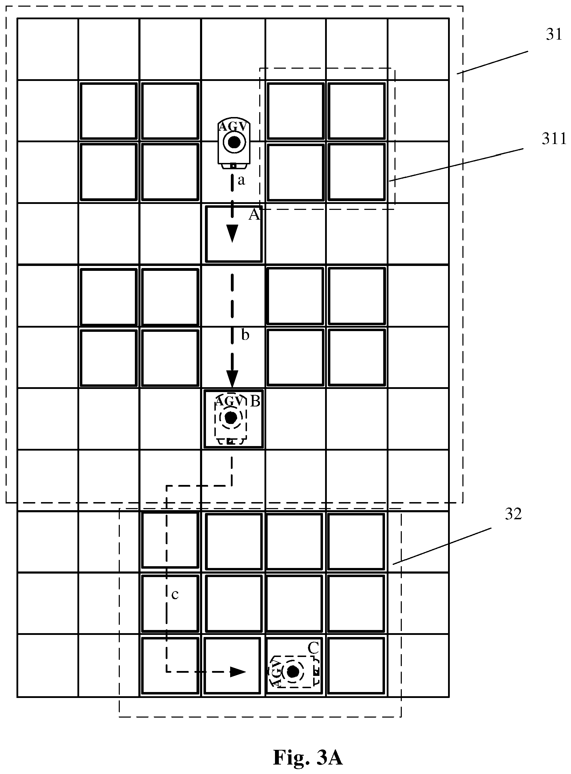

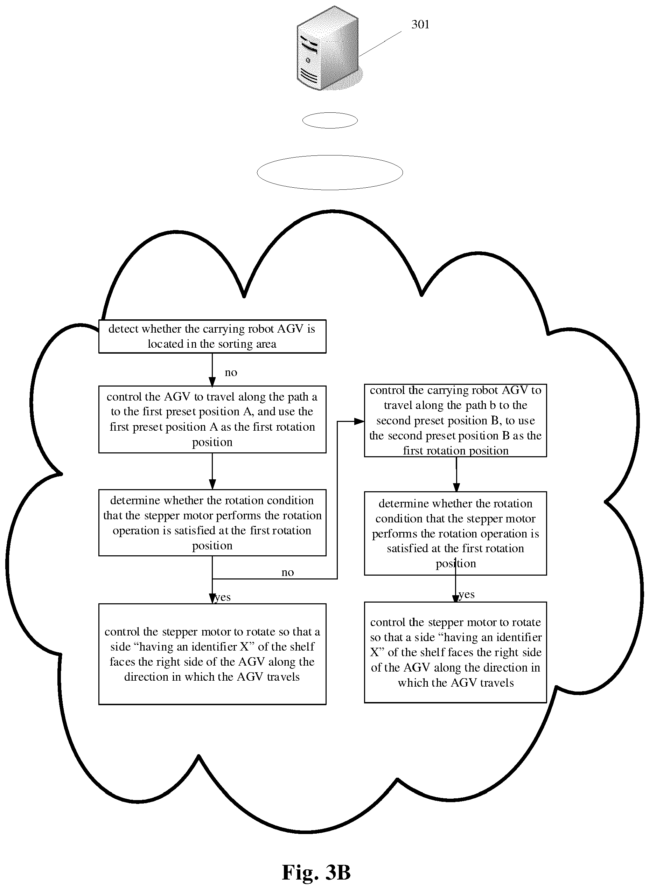

With continued reference to FIGS. 3A-3B, FIG. 3Ais a schematic diagram of a grid map applied to a storage warehouse of the present disclosure, and FIG. 3B is a schematic diagram of an application scenario of a method for controlling based on a carrying robot according to the present embodiment. The present application scenario is described in detail in connection with FIGS. 3A and 3B.

As shown in FIG. 3A, the distribution map of the storage warehouse may be embodied by a grid map. The storage warehouse 30 may include a non-sorting area 31 and a sorting area 32. The non-sorting area includes a plurality of shelf areas 311 for storing shelves and lanes for travelling by carrying robots AGV The sorting area includes a position C at which the sorting table is located. The carrying robot AGV may travel along a predetermined path a-b-c to a position C in which the sorting table is located after the shelf is picked out of the shelf area 311. The carrying robot AGV is provided with a stepping motor, and a shelf selected by the AGV of the carrying robot is connected to the stepping motor. The stepper motor has a rotation function, and rotation of the stepper motor drives rotation of a shelf connected to the stepper motor. The first preset position A and the second preset position B are positions of intersections of the lanes for travelling by the carrying robot AGV When the carrying robot AGV travels to this position, the stepper motor can drive the shelf to rotate so that the side of the shelf with the target identifier faces the designated direction.

In the application scenario shown in FIG. 3B, the server 301 may first detect whether the carrying robot AGV is located in the sorting area 32. When it is detected that the carrying robot AGV is located in the non-sorting area 31, the carrying robot AGV may be controlled to travel along the path a to the first preset position A, and the first preset position A is used as the first rotation position. Next, the server 301 may determine whether the rotation condition that the stepper motor performs the rotation operation is satisfied at the first rotation position. When it is determined that the rotation condition is satisfied, the stepper motor may be controlled to rotate so that a side "having an identifier X" of the shelf faces the right side of the AGV along the direction in which the AGV travels.

In some optional application scenarios, when the server 301 detects that the rotation condition that the stepper motor performs the rotation operation is not satisfied at the first preset position A, the carrying robot AGV may be controlled to travel along the path b to the second preset position B, to use the second preset position B as the first rotation position, and then to determine whether the rotation condition that the stepper motor performs the rotation operation is satisfied at the first rotation position. When it is determined that the rotation condition is satisfied, the stepper motor may be controlled to rotate so that a side "having an identifier X" of the shelf faces the right side of the AGV along the direction in which the AGV travels.

According to the method and apparatus for controlling based on the carrying robot provided in the embodiments of the present disclosure, by detecting whether the carrying robot is currently located in a sorting area, in response to detecting that the carrying robot is not currently located in the sorting area, whether a rotatable stepping motor connected to the carrying robot and a shelf satisfies a rotation condition for performing a rotation operation is determined at a preset first rotation position, and in response to determining that the rotation condition is satisfied at the first rotation position, the stepping motor may be controlled to rotate so that a side, having a target identifier, of the shelf faces a designated direction, thereby enabling the carrying robot to directly perform a side-changing operation on the shelf when the rotation condition is satisfied, thereby reducing the number of carrying robots performing a side-changing operation on the shelf at the position, designated by the sorting area, for performing a side-changing operation on the shelf, thereby improving the efficiency of the side-changing operation on the shelf, and improving the sorting speed of goods.

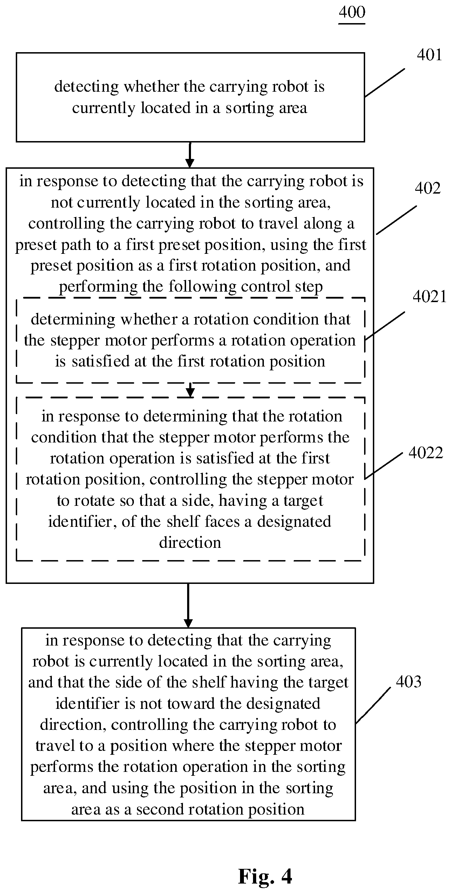

Referring further to FIG. 4, a flow diagram 400 of yet another embodiment of a method for controlling based on a carrying robot according to the present disclosure is shown. The carrying robot carries a shelf connected to the carrying robot through a rotatable stepper motor. The flow 400 of the control method based on the carrying robot includes the steps of 401 to 403.

Step 401 includes detecting whether the carrying robot is currently located in the sorting area.

In this embodiment, the execution body of the control method based on the carrying robot (for example, the control device 101 shown in FIG. 1) can detect whether the carrying robot is currently located in the sorting area.

Step 402 includes in response to detecting that the carrying robot is not currently located in the sorting area, controlling the carrying robot to travel along a preset path to a first preset position, and using the first preset position as the first rotation position.

In the present embodiment, the first preset position may be used as the first rotation position, thereby performing the following control steps.

Step 4021 includes determining whether the rotation condition that the stepper motor performs the rotation operation is satisfied at the first rotation position.

Step 4022 includes in response to determining that the rotation condition that the stepper motor performs the rotation operation is satisfied at the first rotation position, controlling the stepper motor to rotate so that the side of the shelf having the target identifier faces the designated direction.

In the present embodiment, the specific processing of step 401, step 402, step 4021, and step 4022 and the technical effects thereof may be described with reference to the related description of step 201, step 202, step 2021, and step 2022 in the corresponding embodiment of FIG. 2, respectively, and details are not described herein.

Step 403 includes in response to detecting that the carrying robot is currently located in the sorting area and that the side of the shelf having the target identifier is not toward the designated direction, controlling the carrying robot to travel to the position where the stepper motor performs the rotation operation in the sorting area and using the position as the second rotation position.

In the present embodiment, when the execution body detects that the carrying robot is currently located in the sorting area, whether the side of the shelf having the target mark faces the designated direction is determined. That is, when the carrying robot arrives at the sorting table, whether a side of the shelf from which an item is to be picked faces the sorting table is determined. When it is determined that the side of the shelf having the target mark is not oriented in the designated direction, it indicates that the rotation condition that the stepper motor performs the rotation operation is not satisfied at each first rotation position in the non-sorting area. Therefore, the execution body may control the carrying robot to travel to a position in the sorting area where the stepper motor can perform the rotation operation and use the position as the second rotation position.

In the present embodiment, the sorting area is generally provided with a plurality of entrances for the carrying robot to enter the second rotation position. The execution body may first determine the number of carrying robots queued at the plurality of entrances, from which one of the entrances with the smallest number of queued carrying robots is selected. Then, the planning route information is generated based on the current position of the carrying robot and the selected entrance position, and then the generated route information is transmitted to the carrying robot for the carrying robot to travel along the generated route to the second rotation position.

In some alternative implementations of the present embodiment, the controlling the carrying robot to travel to a position in the sorting area for the stepper motor to perform a rotation operation includes selecting an entrance position closest to a current position of the carrying robot from at least one entrance position for reaching a second rotation position; generating, based on the selected entrance position, a travel path for the carrying robot to reach the second rotation position from the current position through the selected entrance position; and controlling the carrying robot to travel to the second rotating position along the generated traveling path.

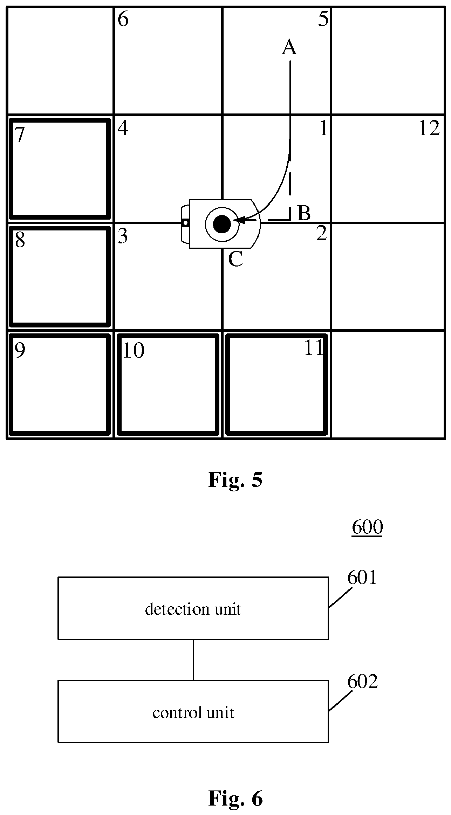

Specifically, as shown in FIG. 5, FIG. 5 shows a schematic diagram of yet another application scenario of a method for controlling based on a carrying robot according to the present disclosure. FIG. 5 is a schematic diagram of an application scenario showing a sorting area of a storage warehouse. The sorting area may be evenly divided on the map into a plurality of map cells of equal size, each of which is denoted by a reference numeral. Here, the position of the reference numeral 10 is a sorting table. An area composed of four map cells: reference numeral 1, reference numeral 2, reference numeral 3, and reference numeral 4, is a second rotation position area. The carrying robot needs to reach the intersection point C of the four map cells through the entrance, so that the stepper motor can perform the rotation operation. A position of the map cell shown by reference numeral 1 adjacent to the map cell shown by reference numeral 5 is provided with an entrance into the second rotation position area, which may be identified as a first entrance ; a position of the map cell shown by reference numeral 4 adjacent to the map cell shown by reference numeral 6 is provided with an entrance into the second rotation position area, which may be identified as a second entrance; a position of the map cell shown by reference numeral 4 adjacent to the map cell shown by reference numeral 7 is provided with an entrance into the second rotation position area, which may be identified as a third entrance; a position of the map cell shown by reference numeral 2 adjacent to the map cell shown by reference numeral 12 is provided with an entrance into the second rotation position area, which may be identified as a fourth entrance .

When the carrying robot is located in the area represented by the map cell shown by reference numeral 1, it can be determined that the position closest to the carrying robot is the first entrance. Thus, the execution body may plan a path that the carrying robot enters from the first entrance to the second rotation position area in which the stepper motor performs the rotation operation. As shown in FIG. 5, the path may include a straight line from point A to point B and a straight line from point B to point C; or include a straight line from point A to point B and an arc from point B to point C. Preferably, the planned path includes a straight line from point A to point B and an arc from point B to point C. As a result, the carrying robot may not need to reduce the speed at the corner to make a turn, which is needed when the carrying robot travels in a straight line, thereby increasing the traveling speed of the carrying robot. Finally, the execution body may transmit the planned path to the carrying robot so that the carrying robot travels along the planned route.

It should be noted that the second rotation position region may be a region enclosed by a partition plate or the like, or may be an open region formed by identifying geographical coordinate boundaries.

In some alternative implementations of the present embodiment, the method for controlling based on the carrying robot may further include the step of determining the position information of the next position of the carrying robot in response to receiving an instruction that a side of the shelf having the target identifier faces a designated direction; and controlling the carrying robot to travel to the next position.

In a specific implementation, determining position information of a next position of the carrying robot includes determining a number of carrying robots which will perform sorting tasks before the carrying robot and determining next position information based on the determined number.

FIG. 5 is still used as an example for illustration. In FIG. 5, the position represented by the map cell shown by reference numeral 11 is a sorting table. The positions represented by the map cell shown by reference numerals 8, 9 and 10 are positions in which the carrying robots queue to enter the sorting table. The position of the map cell shown by the reference numeral 4 adjacent to the map cell shown by the reference numeral 7, the position of the map cell shown by the reference numeral 3 adjacent to the map cell shown by the reference numeral 8, the position of the map cell shown by the reference numeral 4 adjacent to the map cell shown by the reference numeral 10, and the position of the map cell shown by the reference numeral 3 adj acent to the map cell shown by the reference numeral 11 are provided with exits that the carrying robot travels from the second rotation position area to the sorting table, respectively. After the shelf rotates the side with the target identifier to the designated direction at the second rotation position, the number of other carrying robots queued at the sorting table may be further determined. For example, when the number is three, there are queuing carrying robots at the positions represented by the map cells shown by reference numerals 8 to 10. The execution body may cause the carrying robot to travel to a position represented by the map cell shown by reference numeral 6. Thus, the execution body may plan a path from the current position of the carrying robot to the position represented by the map cell shown by reference numeral 6.

In a specific implementation, the execution body may further detect whether the deviation between the traveling direction of the carrying robot and the next position exceeds a preset threshold value; in response to determining that the deviation between the traveling direction of the carrying robot and the next position exceeds the preset threshold value, the traveling direction of the carrying robot is adjusted so that the carrying robot travels to the next position.

As can be seen from FIG. 4, unlike the embodiment shown in FIG. 2, the present embodiment highlights the steps of moving the carrying robot to the second rotation position, planning the path of moving the carrying robot to the second rotation position and away from the second rotation position, so that the area of the sorting area occupied by the second rotation position area can be reduced, thereby improving the site utilization rate of the sorting area; at the same time, by planning the path that the carrying robot travels from the second rotating position, the carrying robot can quickly enter the queuing position of the sorting table, thereby further improving the working efficiency of the carrying robot.

With further reference to FIG. 6, as an implementation of the method shown in each of the above figures, the present disclosure provides an embodiment of an apparatus for controlling based on a carrying robot, which corresponds to the method embodiment shown in FIG. 2, and which is particularly applicable to various electronic devices. The carrying robot carries a shelf, which is connected to the carrying robot through a rotatable stepper motor.

As shown in FIG. 6, the apparatus 600 for controlling based on a carrying robot according to the present embodiment includes a detection unit 601 configured to detect whether the carrying robot is currently located in the sorting area; and a first control unit 602 configured to, in response to detecting that the carrying robot is currently located in a non-sorting area, control the carrying robot to travel along a preset path to a first preset position, use the first preset position as a first rotation position, and perform a control step of determining whether a rotation condition that the stepper motor performs a rotation operation is satisfied at the first rotation position; in response to determining that the rotation condition that the stepper motor performs the rotation operation is satisfied at the first rotation position, controlling the stepper motor to rotate so that a side of the shelf having the target identifier faces a designated direction.

The specific processing of the detection unit 601 and the control unit 602 of the apparatus 600 for controlling based on the carrying robot in the present embodiment and the technical effects thereof may be described with reference to step 201 and step 202 in the corresponding embodiment of FIG. 2, respectively, and details are not described herein.

In some alternative implementations of the present embodiment, the control apparatus 600 further includes a second control unit (not shown) configured to in response to determining that the rotation condition that the stepper motor performs the rotation operation is not satisfied at the first rotation position, control the carrying robot to travel along the preset path to the next preset position, and using the next preset position as the first rotation position to continue to execute the control step.

In some alternative implementations of the present embodiment, the rotation condition includes no obstacle at a predetermined distance from the carrying robot; or no other carrying robot passing through the current position where the carrying robot is located.

In some alternative implementations of the present embodiment, the control apparatus 600 further includes a third control unit (not shown) configured to control, in response to detecting that the carrying robot is currently located in the sorting area, and that the side of the shelf having the target identifier is not toward the designated direction, the carrying robot to travel to the position where the stepper motor performs the rotation operation in the sorting area, and using the position in the sorting area as the second rotation position.

In some alternative implementations of the present embodiment, the third control unit (not shown) includes a selection module (not shown) configured to select an entrance position closest to the current position of the carrying robot from at least one entrance position reachable to the second rotation position; a generation module (not shown) configured to generate a travel path of the carrying robot from a current position to a second rotation position through the selected entrance position, based on the selected entrance position; and a control module (not shown) configured to control the carrying robot to travel along the generated travel path to the second rotation position.

In some alternative implementations of the present embodiment, the control device 600 further includes a determination unit (not shown) configured to determine the position information of the next position of the carrying robot in response to receiving an instruction that a side of the shelf having the target identifier faces the designated direction; and a fourth control unit (not shown) configured to control the carrying robot to travel to the next position.

In some alternative implementations of the present embodiment, the determination unit (not shown) is further configured to determine a number of carrying robots that will perform sorting tasks before the carrying robots; and determine next position information based on the determined number.

In some alternative implementations of the present embodiment, the determination unit (not shown) is further configured to detect whether the deviation between the traveling direction of the carrying robot and the next position exceeds a preset threshold value; In response to determining that the deviation between the traveling direction of the carrying robot and the next position exceeds a preset threshold value, adjusting the traveling direction of the carrying robot so that the carrying robot travels to the next position.

It should be noted that the implementation details and technical effects of the units in the empty box processing apparatus provided in the embodiments of the present disclosure may be described with reference to other embodiments of the present disclosure, and details are not described herein.

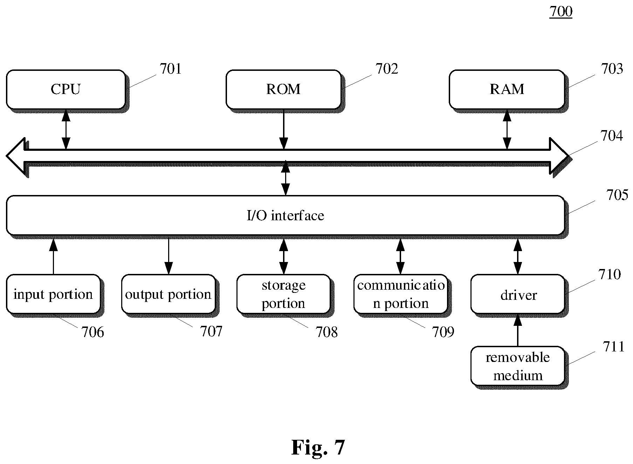

Referring now to FIG. 7, there is shown a schematic structural diagram of a computer system 700 adapted for implementing a control device of an embodiment of the present disclosure. The control device shown in FIG. 7 is merely an example and should not impose any limitation on the functionality and scope of use of the embodiments of the present disclosure.

As shown in FIG. 7, the computer system 700 includes a central processing unit (CPU, Central Processing Unit) 701, which may perform various appropriate actions and processes according to a program stored in a read-only memory (ROM, Read Only Memory) 702 or a program loaded into a random access memory (RAM, Random Access Memory) 703 from a storage portion 708. In RAM 703, various programs and data required for the operation of the system 700 are also stored. CPU 701, ROM 702, and RAM 703 are connected to each other via a bus 704. An input/output (I/O, Input/Output) interface 705 is also connected to bus 704.

The following components are connected to the I/O interface 705: an input portion 706 including a keyboard, a mouse, and the like; an output portion 707 including a cathode ray tube (CRT, Cathode Ray Tube), a liquid crystal display (LCD, Liquid Crystal Display), a speaker and the like; a storage portion 708 including a hard disk or the like; and a communication portion 709 including a network interface card such as a LAN (Local Area Network) card, a modem, or the like. The communication portion 709 performs communication processing via a network such as the Internet. The driver 710 may be alternatively connected to the I/O interface 705 as desired. A removable medium 711, such as a magnetic disk, an optical disk, a magneto-optical disk, a semiconductor memory, or the like, is mounted on the drive 710 as required so that a computer program read therefrom is installed on the storage portion 708 as required.

In particular, in accordance with embodiments of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication portion 709, and/or installed from the removable medium 711. When the computer program is executed by the central processing unit (CPU) 701, the above functions defined in the method of the present disclosure are performed. It should be noted that the computer-readable medium described above in the present disclosure may be a computer-readable signal medium or a computer-readable storage medium or any combination of the two. The computer-readable storage medium may be, for example, but not limited to, an electrical, magnetic, optical, electromagnetic, infrared, or semiconductor system, device, or component, or any combination of any of the above. More specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, the computer-readable signal medium may include a data signal propagated in baseband or as part of a carrier wave, carrying computer-readable program code. Such propagated data signals may take a variety of forms including, but not limited to, electromagnetic signals, optical signals, or any suitable combination thereof. The computer-readable signal medium may also be any computer-readable medium other than a computer-readable storage medium, which may transmit, propagate, or transmit a program for use by or in connection with an instruction execution system, apparatus, or device. The program code embodied on the computer readable medium may be transmitted using any suitable medium, including, but not limited to, wireless, wire, fiber optic cable, RF, and the like, or any suitable combination thereof

The computer program code for performing the operations of the present disclosure may be written in one or more programming languages, including object-oriented programming languages such as Java, Smalltalk, C++, and conventional programming languages such as "C" language and similar programming languages. The program code may be executed entirely on the user computer, partly on the user computer, as a separate software package, partly on the user computer, partly on the remote computer, or entirely on the remote computer or server. In the case involving a remote computer, the remote computer may be connected to the user computer through any kind of network, including a local area network (LAN) or a wide area network (WAN), or may be connected to an external computer (e.g., via an Internet connection using an Internet service provider).

Flowcharts and block diagrams in the drawings illustrate architectures, functions, and operations of possible implementations of systems, methods, and computer program products in accordance with various embodiments of the present disclosure. In this regard, each block in a flowchart or block diagram may represent a module, program segment, or portion of code that contains one or more executable instructions for implementing a designated logical function. It should also be noted that in some alternative implementations, the functions noted in the blocks may also occur in an order different from that noted in the drawings. For example, two successively represented blocks may actually be executed substantially in parallel, and they may sometimes be executed in the reverse order, depending on the functionality involved. It is also noted that each block of the block diagrams and/or flowcharts, and combinations of blocks in the block diagrams and/or flowcharts, may be implemented with a dedicated hardware-based system that performs the designated functions or operations, or may be implemented with a combination of dedicated hardware and computer instructions.

The elements described in the embodiments of the present disclosure may be implemented by means of software or by means of hardware. The described unit may also be arranged in a processor, which may be described, for example, as a processor including a detection unit and a control unit. Here, the names of these units do not constitute a limitation on the unit itself in some cases. For example, the detection unit may also be described as a unit for detecting whether the carrying robot is currently located in the sorting area.

In another aspect, the present disclosure further provides a computer readable medium. The computer readable medium may be included in the apparatus described in the above embodiments or a stand-alone computer readable medium not assembled into the apparatus. The computer readable medium stores one or more programs which, when executed by the apparatus, cause the apparatus to; detect whether the carrying robot is currently located in the sorting area; In response to detecting that the carrying robot is currently located in a non-sorting area, controlling the carrying robot to travel along a preset path to a first preset position, using the first preset position as a first rotation position, and performing a control step of determining whether a rotation condition that the stepper motor performs a rotation operation is satisfied at the first rotation position; in response to determining that the rotation condition that the stepper motor performs the rotation operation is satisfied, controlling the stepper motor to rotate so that a side of the shelf having the target identifier faces a designated direction.

## Claims

1. A method for controlling based on a carrying robot (103, 104), wherein the carrying robot carries a shelf (107, 108) connected to the carrying robot (103, 104) through a rotatable stepper motor (105, 106), the method comprising:
detecting (201) whether the carrying robot is currently located in a sorting area or a non-sorting area, the sorting area being designated in a storage warehouse for sorting items on shelves in the storage warehouse, and the non-sorting area including a shelf area for storing the shelves, and an area connecting the shelf area and the sorting area and being used for travelling by the carrying robot; and
in response to detecting that the carrying robot (103, 104) is currently located in the non-sorting area, controlling the carrying robot (103, 104) to travel along a preset path to a first preset position in the non-sorting area, using the first preset position as a first rotation position, and performing, at the first rotation position, a control step comprising: determining (2021) whether a rotation condition for the stepper motor (105, 106) to perform a rotation operation is satisfied at the first rotation position, and in response to determining that the rotation condition for the stepper motor (105, 106) to perform the rotation operation is satisfied at the first rotation position, controlling (2022) the stepper motor (105, 106) to rotate so that a side, having a target identifier, of the (107, 108) shelf faces a designated direction,
wherein the rotation conditions comprise:
no obstacle at a predetermined distance from the carrying robot (103, 104); and/or
no other carrying robot passing a current position where the carrying robot (103, 104) is located, and
wherein the method further comprises:
in response to detecting that the carrying robot (103, 104) is currently located in the sorting area, and that the side of the (107, 108) shelf having the target identifier is not toward the designated direction, controlling (403) the carrying robot (103, 104) to travel to a second rotation position where the stepper motor (105, 106) performs the rotation operation in the sorting area.

2. The method according to claim 1, wherein the method further comprises:
in response to determining that the rotation condition for the stepper motor (105, 106) to perform the rotation operation is not satisfied at the first rotation position, controlling (202) the carrying robot (103, 104) to travel along the preset path to a next preset position, using the next preset position as the first rotation position, and continuing to execute the control step at the next preset position.

3. The method according to claim 1, wherein the controlling the carrying robot (103, 104) to travel to the position where the stepper motor (105, 106) performs the rotation operation in the sorting area comprises:
selecting, from at least one entrance position, an entrance position closest to a current position of the carrying robot (103, 104), wherein the entrance position is an entrance into the second rotation position;
generating, based on the selected entrance position, a travel path for the carrying robot (103, 104) to reach the second rotation position from the current position through the selected entrance position; and
controlling the carrying robot (103, 104) to travel to the second rotation position along the generated travel path.

4. The method according to claim 1, wherein the method further comprises:
determining position information of a next position of the carrying robot (103, 104) in response to receiving an instruction that the side of the shelf (107, 108) having the target identifier faces the designated direction; and
controlling the carrying robot (103, 104) to travel to the next position.

5. The method according to claim 4, wherein the determining position information of the next position of the carrying robot (103, 104) comprises:
determining a number of carrying robot (103, 104) that will perform a sorting task before the carrying robot (103, 104); and
determining information of a next position based on the determined number.

6. The method according to claim 4, wherein the controlling the carrying robot (103, 104) to travel to the next position comprises:
detecting whether a deviation between a traveling direction of the carrying robot (103, 104) and the next position exceeds a preset threshold value; and
in response to determining that the deviation between the traveling direction of the carrying robot (103, 104) and the next position exceeds the preset threshold value, adjusting the traveling direction of the carrying robot (103, 104) so that the carrying robot (103, 104) travels to the next position.

7. An apparatus for controlling based on a carrying robot, the apparatus comprising units for performing the method according to any one of claims 1 to 6.

8. An electronic device comprising:
one or more processors;
a storage device storing one or more programs,
wherein the one or more programs when executed by the one or more processors cause the one or more processors to implement a method as claimed in any one of claims 1 to 6.

9. A computer readable medium storing a computer program, wherein the program, when executed by a processor, implements the method of any one of claims 1 to 6.

## Patentansprüche

1. Verfahren zur Steuerung, basierend auf einem Trägerroboter (103, 104), wobei der Trägerroboter ein Regal (107, 108) trägt, das mit dem Trägerroboter (103, 104) durch einen drehbaren Schrittmotor (105, 106) verbunden ist, wobei das Verfahren Folgendes umfasst:
Nachweisen (201), ob sich der Trägerroboter gegenwärtig in einem Sortier- oder Nicht-Sortierbereich befindet, wobei der Sortierbereich in einer Lagerhalle dazu vorgesehen ist, Gegenstände auf Regalen in der Lagerhalle zu sortieren, und wobei der Nicht-Sortierbereich einen Regalbereich, um die Regale zu lagern, und einen Bereich beinhaltet, der den Regalbereich und den Sortierbereich verbindet und verwendet wird, um durch den Trägerroboter bewegt zu werden, und
in Reaktion auf den Nachweis, dass sich der Trägerroboter (103, 104) gegenwärtig im Nicht-Sortierbereich befindet, Steuern des Trägerroboters (103, 104), um sich entlang eines voreingestellten Wegs in eine erste voreingestellte Position im Nicht-Sortierbereich unter Verwendung der ersten voreingestellten Position als eine erste Drehposition zu bewegen und an der ersten Drehposition einen Steuerungsschritt durchzuführen, umfassend: Bestimmen (2021), ob eine Drehbedingung für den Schrittmotor (105, 106), um einen Drehvorgang durchzuführen, an der ersten Drehposition erfüllt ist, und in Antwort auf das Bestimmen, dass die Drehbedingung für den Schrittmotor (105, 106), um den Drehvorgang durchzuführen, an der ersten Drehposition erfüllt ist, Steuern (2022) des Schrittmotors (105, 106), um sich zu drehen, so dass eine Seite, die einen Zielidentifikator aufweist, der (107, 108) Regalseiten eine festgelegte Richtung,
wobei die Drehbedingungen Folgendes umfassen:
kein Hindernis in einem vorbestimmten Abstand vom Trägerroboter (103, 104); und/oder
kein anderer Trägerroboter, der durch eine gegenwärtige Position verläuft, an der sich der Trägerroboter (103, 104) befindet, und
wobei das Verfahren weiter Folgendes umfasst:
in Reaktion auf den Nachweis, dass sich der Trägerroboter (103, 104) gegenwärtig im Sortierbereich befindet und dass die Seite des Regals (107, 108), die den Zielidentifikator aufweist, nicht hin zur festgelegten Richtung angeordnet ist, Steuern (403) des Trägerroboters (103, 104), damit dieser sich in eine zweite Drehposition bewegt, in der der Schrittmotor (105, 106) den Drehvorgang im Sortierbereich durchführt.

2. Verfahren nach Anspruch 1, wobei das Verfahren weiter Folgendes umfasst:
in Reaktion auf das Bestimmen, dass die Drehbedingung für den Schrittmotor (105, 106), den Drehvorgang durchzuführen, nicht an der ersten Drehposition erfüllt ist, Steuern (202) des Trägerroboters (103, 104), damit dieser sich entlang eines voreingestellten Wegs in eine folgende voreingestellte Position bewegt, unter Verwendung der folgenden voreingestellten Position als die erste Drehposition und weiteres Durchführen des Steuerungsschritts an der folgenden voreingestellten Position.

3. Verfahren nach Anspruch 1, wobei das Steuern des Trägerroboters (103, 104), um sich in die Position zu bewegen, in der der Schrittmotor (105, 106) den Drehvorgang im Sortierbereich durchführt umfasst:
Auswählen, aus mindestens einer Eingangsposition, einer Eingangsposition, die sich am nächsten an einer gegenwärtigen Position des Trägerroboters (103, 104) befindet, wobei die Eingangsposition ein Eingang in die zweite Drehposition ist;
Generieren, basierend auf der ausgewählten Eingangsposition, eines Bewegungspfads für den Trägerroboter (103, 104), damit dieser die zweite Drehposition von der gegenwärtigen Position durch die ausgewählte Eingangsposition erreicht; und
Steuern des Trägerroboters (103, 104), damit dieser sich in die zweite Drehposition entlang des generierten Bewegungspfads bewegt.

4. Verfahren nach Anspruch 1, wobei das Verfahren weiter Folgendes umfasst:
Bestimmen der Positionsinformation einer folgenden Position des Trägerroboters (103, 104) in Reaktion auf das Empfangen einer Anweisung, dass die Seite des Regals (107, 108), die den Zielidentifikator aufweist, der festgelegten Richtung gegenüberliegt; und
Steuern des Trägerroboters (103, 104), um sich in die folgende Position zu bewegen.

5. Verfahren nach Anspruch 4, wobei das Bestimmen der Positionsinformation der folgenden Position des Trägerroboters (103, 104) umfasst:
Bestimmen einer Anzahl von Trägerrobotern (103, 104), die eine Sortieraufgabe vor dem Trägerroboter (103, 104) durchführen; und
Bestimmen der Information einer folgenden Position basierend auf der festgesetzten Anzahl.

6. Verfahren nach Anspruch 4, wobei das Steuern des Trägerroboters (103, 104), um sich in die folgende Position zu bewegen, umfasst:
Nachweisen, ob eine Abweichung zwischen einer Bewegungsrichtung des Trägerroboters (103, 104) und der folgenden Position einen voreingestellten Schwellenwert übersteigt, und
in Reaktion auf das Bestimmen, dass die Abweichung zwischen der Bewegungsrichtung des Trägerroboters (103, 104) und der folgenden Position den voreingestellten Schwellenwert übersteigt, Einstellen der Bewegungsrichtung des Trägerroboters (103, 104), so dass sich der Trägerroboter (103, 104) in die folgende Position bewegt.

7. Gerät zum Steuern, basierend auf einem Trägerroboter, wobei das Gerät Einheiten zur Durchführung des Verfahrens nach einem der Ansprüche 1 bis 6, umfasst.

8. Elektronische Vorrichtung, umfassend:
einen oder mehrere Prozessoren;
eine Speichervorrichtung, die ein oder mehrere Programme speichert,
wobei das eine oder die mehreren Programme, wenn sie von dem einen oder den mehreren Prozessoren durchgeführt werden, verursachen, dass der eine oder die mehreren Prozessoren ein Verfahren nach einem der Ansprüche 1 bis 6 implementieren.

9. Computer-lesbares Medium, das ein Computerprogramm speichert, wobei das Programm, wenn es von einen Prozessor durchgeführt wird, das Verfahren nach einem der Ansprüche 1 bis 6 implementiert.

## Revendications

1. Procédé de commande basé sur un robot transporteur (103, 104), dans lequel le robot transporteur transporte une étagère (107, 108) reliée au robot transporteur (103, 104) par l'intermédiaire d'un moteur pas à pas rotatif (105, 106), le procédé comprenant les étapes ci-dessous consistant à :
détecter (201) si le robot transporteur se situe actuellement dans une zone de tri ou une zone de non-tri, la zone de tri étant désignée dans un entrepôt de stockage pour trier des articles sur des étagères dans l'entrepôt de stockage, et la zone de non-tri incluant une zone d'étagères pour stocker les étagères, et une zone reliant la zone d'étagères et la zone de tri et étant utilisée pour se déplacer par le robot transporteur ; et
en réponse à une détection selon laquelle le robot transporteur (103, 104) se situe actuellement dans la zone de non-tri, commander le robot transporteur (103, 104) afin qu'il se déplace le long d'une trajectoire prédéfinie vers une première position prédéfinie dans la zone de non-tri, utiliser la première position prédéfinie en tant qu'une première position de rotation, et mettre en oeuvre, à la première position de rotation, une étape de commande comprenant l'étape consistant à : déterminer (2021) si une condition de rotation pour que le moteur pas à pas (105, 106) mette en oeuvre une opération de rotation est satisfaite à la première position de rotation, et en réponse à une détermination selon laquelle la condition de rotation pour que le moteur pas à pas (105, 106) mette en oeuvre l'opération de rotation est satisfaite à la première position de rotation, commander (2022) le moteur pas à pas (105, 106) afin qu'il tourne de sorte qu'un côté, présentant un identifiant cible, de l'étagère (107, 108), fait face à une direction désignée ;
dans lequel les conditions de rotation comprennent :
une absence d'obstacle à une distance prédéterminée du robot transporteur (103, 104) ; et/ou
qu'aucun autre robot transporteur ne transite par une position actuelle où le robot transporteur (103, 104) est situé, et
dans lequel le procédé comprend en outre l'étape ci-dessous consistant à :
en réponse à une détection selon laquelle le robot transporteur (103, 104) est actuellement situé dans la zone de tri, et selon laquelle le côté de l'étagère (107, 108) présentant l'identifiant cible n'est pas orienté vers la direction désignée, commander (403) le robot transporteur (103, 104) afin qu'il se déplace vers une deuxième position de rotation où le moteur pas à pas (105, 106) met en oeuvre l'opération de rotation dans la zone de tri.

2. Procédé selon la revendication 1, dans lequel le procédé comprend en outre l'étape ci-dessous consistant à :
en réponse à une détermination selon laquelle la condition de rotation pour que le moteur pas à pas (105, 106) mette en oeuvre l'opération de rotation n'est pas satisfaite à la première position de rotation, commander (202) le robot transporteur (103, 104) afin qu'il se déplace le long de la trajectoire prédéfinie vers une position prédéfinie suivante, en utilisant la position prédéfinie suivante en tant que la première position de rotation, et continuer à exécuter l'étape de commande à la position prédéfinie suivante.

3. Procédé selon la revendication 1, dans lequel l'étape de commande du robot transporteur (103, 104) pour qu'il se déplace jusqu'à la position où le moteur pas à pas (105, 106) met en oeuvre l'opération de rotation dans la zone de tri comprend les étapes ci-dessous consistant à :
sélectionner, parmi au moins une position d'entrée, une position d'entrée la plus proche d'une position actuelle du robot transporteur (103, 104), dans laquelle la position d'entrée est une entrée dans la deuxième position de rotation ;
générer, sur la base de la position d'entrée sélectionnée, une trajectoire de déplacement pour que le robot transporteur (103, 104) atteigne la deuxième position de rotation à partir de la position actuelle en passant par la position d'entrée sélectionnée ; et
commander le robot transporteur (103, 104) pour qu'il se déplace vers la deuxième position de rotation le long de la trajectoire de déplacement générée.

4. Procédé selon la revendication 1, dans lequel le procédé comprend en outre les étapes ci-dessous consistant à :
déterminer des informations de position d'une position suivante du robot transporteur (103, 104) en réponse à la réception d'une instruction selon laquelle le côté de l'étagère (107, 108) présentant l'identifiant cible fait face à la direction désignée ; et
commander le robot transporteur (103, 104) pour qu'il se déplace vers la position suivante.

5. Procédé selon la revendication 4, dans lequel l'étape de détermination d'informations de position de la position suivante du robot transporteur (103, 104) comprend les étapes ci-dessous consistant à :
déterminer un nombre de robots transporteurs (103, 104) qui mettront en oeuvre une tâche de tri avant le robot transporteur (103, 104) ; et
déterminer des informations d'une position suivante sur la base du nombre déterminé.

6. Procédé selon la revendication 4, dans lequel l'étape consistant à commander le robot transporteur (103, 104) afin qu'il se déplace à la position suivante comprend les étapes ci-dessous consistant à :
détecter si un écart entre une direction de déplacement du robot transporteur (103, 104) et la position suivante dépasse une valeur de seuil prédéfinie ; et
en réponse à une détermination selon laquelle l'écart entre la direction de déplacement du robot transporteur (103, 104) et la position suivante dépasse la valeur de seuil prédéfinie, ajuster la direction de déplacement du robot transporteur (103, 104) de sorte que le robot transporteur (103, 104) se déplace vers la position suivante.

7. Appareil de commande basé sur un robot transporteur, l'appareil comprenant des unités destinées à mettre en oeuvre le procédé selon l'une quelconque des revendications 1 à 6.

8. Dispositif électronique comprenant :
un ou plusieurs processeurs ;
un dispositif de stockage stockant un ou plusieurs programmes,
dans lequel ledit un ou lesdits plusieurs programmes, lorsqu'ils sont exécutés par ledit un ou lesdits plusieurs processeurs, amènent ledit un ou lesdits plusieurs processeurs à mettre en oeuvre un procédé selon l'une quelconque des revendications 1 à 6.

9. Support lisible par ordinateur stockant un programme informatique, dans lequel le programme, lorsqu'il est exécuté par un processeur, met en oeuvre le procédé selon l'une quelconque des revendications 1 à 6.
